# EUROPÄISCHE PATENTSCHRIFT

(11) **EP 3 514 582 B1**
(45) Veröffentlichungstag und Bekanntmachung des Hinweises auf die Patenterteilung: **18.01.2023**
(21) Anmeldenummer: 18210406.7
(22) Anmeldetag: 05.12.2018
(51) Int. Cl.: B29C 45/37, G02B 5/124, B29D 11/00

(54) **ELASTISCHER RETROREFLEKTOR**
ELASTIC RETROREFLECTOR
RÉTRORÉFLECTEUR ÉLASTIQUE

(30) Priorität: 22.01.2018 DE 102018101291
(43) Veröffentlichungstag der Anmeldung: 24.07.2019
(73) Patentinhaber: Gubela, Hans-Erich, 77876 Kappelrodeck (DE)
(72) Erfinder: Gubela, Hans-Erich, 77876 Kappelrodeck (DE)
(74) Vertreter: Patentanwälte Bregenzer und Reule Partnerschaftsgesellschaft mbB

(56) Entgegenhaltungen:
- EP-A1- 2 927 580
- DE-A1-102014 212 918
- US-A1- 2006 158 736
- US-A1- 2011 227 238

## Beschreibung

Die Erfindung bezieht sich auf eine verbesserte Herstellung und einfachere Verwendung von retroreflektierenden Elementen in Tripelbauweise.

Unter Retroreflektor sollen optische Elemente verstanden werden, die in einem bestimmten Winkelbereich einfallendes Licht unabhängig vom exakten Einfallswinkel wieder zurück zur Lichtquelle zurücklenken. Gewisse Abweichungen des zurückreflektierten Strahles von der Einfallsrichtung sind dabei möglich und teilweise sogar erwünscht, wenn z.B. Lichtquelle und intendierter Rezipient der reflektierten Strahlung nicht in einer exakten Flucht vom Reflektor aus betrachtet sich befinden (hier sei beispielhaft der Autoscheinwerfer als Lichtquelle genannt sowie der Autoführer als Rezipient mit deutlich erhöhter Position im Vergleich zum Scheinwerfer mit Bezug zur Straße).

Es sind verschiedene Arten von Retroreflektoren bekannt. Einen bekannten Typ von reflektierenden oder genauer gesagt retroreflektierenden Elementen stellen beispielsweise Folien mit eingebetteten Mikrokugeln vor einer spiegelnden Schicht dar.

US 2006/158736 A1 offenbart einen Retroreflektor, der auf eine gekrümmte Fläche angepasst werden kann. US 2011/227238 A1 offenbart ein beheizbares Abformwerkzeug für einen Retroreflektor.

Im Allgemeinen einen deutlich höheren Retroreflektions- und damit Wirkungsgrad als solche Mikrokugel basierten Folien weisen reflektierende Elemente auf, die ein oder mehrere Cube-Corner-Elemente zur Retroreflektion umfassen. Eine solche Cube-Corner ("Würfelecke") besteht dabei aus drei jeweils im Wesentlichen senkrecht zueinanderstehenden Flächen und wird daher auch Tripel genannt. Ein entsprechender Retroreflektor umfasst dabei im Allgemeinen eine Vielzahl solcher Tripel. Stehen dabei die drei Tripelflächen nicht exakt senkrecht zueinander, so wird die Richtung zumindest eines Teiles des reflektierten Lichtes von der Richtung des einfallenden Lichtes um einen gewissen Betrag abweichen, was aber für gewisse Anwendungenvon Vorteil sein kann. Die hier vorgestellten Verfahren ermöglichen es ebenfalls, Tripel auf die Anforderungen solcher Anwendungen hin maßgeschneidert auszulegen.

Sehr häufig sind auch Anordnungen, bei der die drei im Wesentlichen jeweils zueinander senkrechten Flächen im Wesentlichen quadratisch und von gleicher Größe sind. Sie bilden dann eine Ecke (also 3 in einem Punkt zusammenstoßende Flächen) eines Würfels. Ein solcher spezieller Tripel soll im Folgenden als Full Cube bezeichnet werden. Die Raumdiagonale dieses gedachten Würfels bildet die so genannte Tripelachse. Ist die Lichteintrittsfläche, auf die der Tripel beleuchtet wird, also die Aperturfläche senkrecht zur Tripelachse, so wird beim Full Cube bei Lichteinfall parallel zur Tripelachse ideal 100% des einfallenden Lichts in die Ausgangsrichtung zurückreflektiert, was einen großen Wirkungsgrad von mit diesen Tripeln ausgerüsteten Reflektoren zur Folge hat.

Sollte bisher ein Retroreflektor basierend auf Tripelspiegeln auf einer gekrümmten Fläche aufgebracht werden, war die starre Struktur der Tripelspiegel eine Erschwernis. Um überhaupt Tripelspiegel anbringen zu können, mussten erhebliche Anstrengungen unternommen werden. Die DE 202 07 645 U1 (Anmelderin: IMOS Gubela GmbH) schlägt z. B. als Kräfteausgleichsschicht zwischen einem Tripelreflektor und einem Kabel ein zweiteiliges Klettband vor. Krümmungen mit zwei Krümmungsrichtungen, z. B. sphärische, toroidale, ellipoidische, parabolische oder Hyperbolische Krümmungen sind mit üblichen auf Tripelspiegeln basierenden Retroreflektoren und auch mit Reflektorfolien bisher nicht möglich.

Zur Lösung dieses Problems wird erfindungsgemäß vorgeschlagen, einen Retroreflektor aus Tripelspiegeln in optisches Silikon zu gießen.

Silikone gewinnen in neuerer Zeit als optischer Werkstoff immer mehr an Bedeutung. Ein Beispiel eines optischen Silikons ist in der DE 10 2014 223 785 A1 (Anmelderin: Wacker Chemie AG) beschrieben. Optische Silikone haben meist Polydimethylsiloxan als Grundstoff.

Optisches Silikon hat den Vorteil, dass es elastisch ist und bei der Herstellung im Spritzguss auch Hinterschneidungen zulässt. Aus der WO 2015145026 A1 (Anmelderin: Gaggione Sas) ist z.B. ein Kollimator mit schüsselartiger Form bekannt, der sich trotz Hinterschneidungen aus einer Form entfernen lässt. Insbesondere bei der Beleuchtung von Kraftfahrzeugen spielt Silikon als Vergusswerkstoff für Leuchtdioden (LED) eine immer größere Rolle. In der DE 20 2014 102 938 U1 ist z.B. eine Leuchte beschrieben, die mit ihren Leiterbahnen in Silikon eingegossen ist. Diese Lösung hat den Nachteil, dass immer noch eine Retroreflektorfolie produziert werden muss, die dann an einer Beleuchtungsvorrichtung für Kraftfahrzeuge separat angebracht werden muss. Außerdem muss ein Kleber zum Aufbringen der retroreflektierenden Fläche verwendet werden (siehe z.B. Absatz [0048] der DE 20 2014 102 938 U1). Es besteht also Bedarf, dass die retroreflektierende Fläche, direkt einem Scheinwerferbauteil integriert ist, ohne dass eine separate Folie erforderlich ist. Aufgabe der vorliegenden Erfindung ist es, einen auf Tripelspiegeln basierenden Retroreflektor bereitzustellen, der sich einerseits leicht aus einem Werkzeug entformen lässt, aber andererseits auch nach der Entformung leicht an gekrümmte Oberflächen anbringbar ist.

Diese Aufgabe wird durch einen Retroreflektor gemäß Anspruch 1 sowie durch ein integriertes optisches Bauteil gemäß Anspruch 7 und ein Abformwerkzeug gemäß Anspruch 11 gelöst.

Vorteilhafte Weiterbildungen lassen sich den abhängigen Ansprüchen entnehmen.

Ein erfindungsgemäßer Retroreflektor umfasst eine Anordnung aus einer Vielzahl von Tripeln mit jeweils drei Seitenflächen. Unter einer Anordnung ist ein sich regelmäßig wiederholendes Muster zu verstehen. Ein solches Muster kann beispielsweise im Draufblick aus regelmäßig angeordneten Sechsecken oder Vierecken oder aus Tetraederstrukturen bestehen. Allerdings haben Tetraederstrukturen aufgrund fehlender Referenzflächen einen um 1/3 geringeren Reflexionsgrad als die beiden anderen Geometrien.

Die Seitenflächen können je nach Anwendungsbereich verspiegelt sein oder auf dem Prinzip der Totalreflektion basieren. Aufgrund der Absorption haben verspiegelte Tripelflächen einen geringeren Wirkungsgrad als Tripelflächen, die auf Totalreflektion basieren. Außerdem zeigen verspiegelte Flächen ein anderes Verhalten gegenüber polarisiertem Licht. Jedoch tritt Totalreflektion nur beim Übergang von einem optisch dichteren in ein optisch dünneres Material auf, sodass die reflektierenden Tripelflächen häufig an einer Rückseite, d.h. einer Lichteintrittsfläche abgewandten Seite eines Retroreflektors angebracht sind.

Bei einem idealen Retroreflektor sollen die einfallenden Strahlen wieder in sich selbst zurück reflektiert werden. Dazu müssen die Seitenflächen des Retroreflektors genau senkrecht aufeinander stehen. Es sind jedoch auch Anwendungen z.B. für Weitwinkelreflektoren denkbar, bei denen ein größerer Winkelbereich eines einfallenden Strahls abgedeckt werden muss. In diesem Fall stehen die Flächen nur näherungsweise senkrecht zueinander. D.h. die Flächen schließen zueinander einen Winkel zwischen 85° und 95°, insbesondere zwischen 89° und 91°, bevorzugt zwischen 89° 58' und 90° 2' ein.

Ein erfindungsgemäßer Retroreflektor ist mittels Spritzguss aus einem Trägermaterial herstellbar. Erfindungsgemäß ist vorgesehen, dass als Trägermaterial ein optisches Silikonharz verwendet wird.

Optische Silikone bestehen üblicherweise aus mindestens zwei Komponenten, die miteinander in Verbindung gebracht werden müssen, um zu vulkanisieren, bzw. zu polymerisieren und auszuhärten. Eine der Komponenten enthält üblicherweise einen Platinkatalysator. Bei Spritzgussanwendungen wird vorteilhafterweise ein Silikon aus der Gruppe der "liquid silicone rubber" (LSR) verwendet. Je nach verwendetem Silikon kann eine gegenüber der Raumtemperatur erhöhte Temperatur das Aushärten beschleunigen. Eine geeignete Aushärtungstemperatur ist beispielsweise 150°C. Auch Druck beschleunigt das Aushärten.

Je nach Wahl des Werkstoffs ist ein erfindungsgemäßer Retroreflektor in einem breiten Arbeitsbereich temperaturbeständig. Innerhalb des Arbeitsbereichs behält der Retroreflektor sowohl seine optischen als auch seine mechanischen Eigenschaften bei. Insbesondere ändert sich innerhalb des Arbeitsbereichs der Brechungsindex nur geringfügig. Auch die Effekte thermischer Ausdehnung auf den Strahlgang können innerhalb des Arbeitsbereichs vernachlässigt werden. Typische Untergrenzen des Arbeitsbereichs liegen zwischen -60 °C und -40 °C. Typische Obergrenzen des Arbeitsbereichs liegen zwischen 180 °C und 210 °C.

Die Transmissionseigenschaften in Abhängigkeit von der Wellenlänge hängen von dem verwendeten Silikon ab. Beispielsweise kann optisches Silikon bei Wellenlängen unter 220 nm intransparent sein, bei Wellenlängen im nahen Ultraviolett (ca. 280 nm) bei 2 mm Dicke eine Transmittivität von mindestens 90 % aufweisen und im Bereich des sichtbaren Lichts sowie im nahen Infrarotbereich eine bei 2 mm Dicke eine Transmittivität von mindestens 95 % aufweisen.

Der Brechungsindex optischer Silikone liegt im Bereich des sichtbaren Lichts üblicherweise zwischen 1,39 und 1,51. Bei Wellenlängen von 400 nm ist ein typischer Wert für den Brechungsindex 1,45 bei Wellenlängen von 630 nm bei 1,41. Insbesondere der für Retroflektoren wichtige Grenzwinkel der Totalreflektion liegt im Bereich üblicher aus Polymethylmethacrylat (PMMA) oder Polycarbonat (PC) hergestellter Reflektoren, sodass bei der Verwendung eines optischen Silikons für den erfindungsgemäßen Retroreflektor keine zusätzlichen verspiegelnden Beschichtungen erforderlich sind.

Optische Silikone weisen typische Härten zwischen 40 Shore A und 85 Shore A im vulkanisierten Zustand auf. Die Silikone unterscheiden sich auch in der Art, wie sie zu härten, bzw. zu vulkanisieren sind. Manche Silikone müssen unter UV-Bestrahlung aushärten, bei anderen genügt es, die Komponenten zusammenzufügen und die Temperatur ggf. auf ca. 150 ° C zu erhöhen. Der Fachmann wird die Materialauswahl und die Aushärtebedingen seinen Bedürfnissen anpassen können und bei kommerziell erhältlichen optischen Silikonen den Datenblättern entnehmen können.

Der erfindungsgemäße Retroreflektor kann auch Bestandteil eines integrierten optischen Bauteils sein.

Ein geeignetes Abformwerkzeug zur Herstellung eines erfindungsgemäßen Retroreflektors oder eines optischen Elements, das einen erfindungsgemäßen Retroreflektor beinhaltet, umfasst einen Werkzeugkörper. Der Werkzeugkörper wird von einer Werkzeugoberfläche begrenzt. Der Werkzeugkörper mit seiner Werkzeugoberfläche ist ein Negativ des erfindungsgemäßen Retroreflektors bzw. des den Retroreflektor beinhaltenden optischen Elements. D.h. die Werkzeugoberfläche weist wie der erfindungsgemäße Retroreflektor eine Vielzahl von Tripeln auf. Jedes Tripel hat jeweils drei aneinander angrenzende, sich unter einem Winkel zwischen 85 und 95 Grad vorzugsweise zwischen 89 und 91 Grad, besonders bevorzugt zwischen 89 Grad 58' und 90 Grad 2' gegenseitig schneidende Abformflächen, wobei die Abformflächen jedes Tripels an einem Tripelzentrum aneinanderstoßen, durch das die Symmetrieachse des jeweiligen Tripels verläuft.

Bei der Verwendung eines optischen Silikons im Spritzguss müssen Maßnahmen getroffen werden, dass das Silikon erst in der Spritzgussform aushärtet. Dazu muss die Schnecke, die die Komponenten in eine Spritzgussform drückt, auf Raumtemperatur gehalten werden. Gegebenenfalls kann eine Kühlung erforderlich sein. Damit das Silikon in der Spritzgussform aushärten kann, ist es erforderlich, dass der Werkzeugkörper beheizbar ist.

Der Werkzeugkörper eines erfindungsgemäßen Abformwerkzeugs weist Hinterschneidungen auf. Das heißt, der Werkzeugkörper hat mindestens ein Werkzeugelement, das senkrecht auf einer Entformrichtung stehend einer Entformung entgegensteht. Als Entformungsrichtung ist die Bewegungsrichtung eines hydraulischen Elements einer Spritzgussmaschine zu verstehen. Anders ausgedrückt hat der Werkzeugkörper mindestens ein Element, das in der Entformungsrichtung hinter einer Kavität liegt. Dieses Element steht einer Entformung im Wege. Es ist sogar möglich, dass der Werkzeugkörper in der Entformungsrichtung eine Kavität hinter einer zweiten Kavität hat.

Bei Verwendung von elastischen Werkstoffen (Elastomeren) beispielsweise Silikonen, können die Bauteile trotz der Hinterschneidung über die Form hinweg abgezogen werden, da elastomere Bauteile unter Zug und Druck zwar in einem gewissen Parameterbereich elastisch verformt werden können, nach Beendigung der Zwangskräfte aber wieder in ihre ursprüngliche Geometrie zurückkehren. Es ist darauf zu achten, dass bei der Entformung der elastische Parameterbereich einer Hysteresekurve des verwendeten Silikons nicht verlassen wird. Es ist vorteilhaft, plastische oder bleibende Verformungen zu vermeiden. Es sind jedoch auch Ausführungsformenbei denen gezielt eine Deformation gemäß der Hysteresekurve nach dem Entformen verbleibt.

Zur Herstellung eines erfindungsgemäßen Retroreflektors ist wie folgt vorzugehen:
i. Mindestens zwei Komponenten eines optischen Silikons als Spritzgussmaterial werden im Volumenverhältnis 1:1 getrennt in eine Spritzgussmaschine eingefüllt.
ii. die Komponenten werden in einer Schnecke einer Spitzgussmaschine gemischt in eine Spritzgussform mit dem Abformwerkzeug gedrückt. Die Schnecke muss auf einer Temperatur zwischen 10° C und 30° C gehalten werden, damit beim Transport in die Form keine Aushärtung stattfindet.
iii. die Komponenten des Spritzgussmaterials werden in eine Spritzgussform gedrückt. Dabei wird die Spritzgussform auf eine Temperatur zwischen 130° C und 200° C erwärmt.
iv. Durch die erhöhte Temperatur härten die Komponenten in der Spritzgussform aus.
v. Anschließend kann der Retroreflektor aus der Spritzgussform entformt werden.

Gemäß einer vorteilhaften Weiterbildung eines erfindungsgemäßen Retroreflektors wird der Refroreflektor in einer planen Fläche gegossen und erst nach der Herstellung an die Krümmung eines Gegenstands, der mit einem erfindungsgemäßen Retroreflektor versehen werden soll, angepasst. Das heißt, eine Grundfläche des Retroreflektors nimmt die Form einer gekrümmten Oberfläche des Gegenstands an. Hier wird die elastische Eigenschaft des Werkstoffs Silikon zu Nutze gemacht. Eine Anwendung eines Retroreflektors hat gegenüber einer Reflektorfolie aus herkömmlichem Folienmaterial den Vorteil, dass auch hier Krümmungen in zwei Richtungen möglich sind. So kann, z.B. ein sphärischer, ellipsoider, toroidaler, hyperbolischer oder paraboloidartiger Gegenstand mit einem erfindungsgemäßen Retroreflektor versehen werden. Die Oberfläche des Gegenstands kann konkav oder konvex gewölbt sein oder sogar einen Sattel bilden. Es ist auch denkbar, einen Reflektorträger sehr dünn auszubilden und damit zu einer Reflektorfolie aus Silikon überzugehen.

Gemäß einer anderen vorteilhaften Weiterbildung eines erfindungsgemäßen Retroreflektors kann der Retroreflektor auf einer gekrümmten Fläche aus einem Stück gefertigt werden. Die Fläche kann Hinterschneidungen aufweisen. Für einige Anwendungen ist es vorteilhaft, wenn die Fläche in zwei Richtungen gekrümmt ist. Die Fläche kann beispielsweise eine sphärischen, ellipsoiden, toroidalen, hyperbolische oder paraboloidartige Fläche sein oder als Rotationskörper eine andere rotationssymmetrische mathematische Funktion darstellen. Die Fläche kann konkav oder konvex gewölbt sein oder sogar einen Sattel bilden.

Beispielsweise für Operationsmarker ist es vorteilhaft, wenn der Retroreflektor einen Raumwinkel größer π Steradiant, besonders bevorzugt einen Raumwinkel größer oder gleich 2 π Steradiant umfasst. Auch solche Reflektorgeometrien sind bei Fertigung aus Silikon noch entformbar.

Es sind auch Geometrien denkbar, die nur in einer Richtung gekrümmt sind, beispielweise zylinder- oder kegelförmigen Flächen. Ab einem Polarwinkel größer 135° treten Hinterschneidungen auf. Besonders bevorzugt bleiben die erfindungsgemäßen Retroreflektoren aber auch noch unter einem Polarwinkel größer 180° aus einer Spritzgussform entformbar.

Ein weiterer Aspekt der vorliegenden Erfindung ist, dass die Form der gekrümmten Fläche an eine vorgegebene erste Zielform, beispielsweise die Form eines Autoscheinwerfers angepasst ist, jedoch auch in einer zweiten Zielform, die von der ersten Zielform abweichen kann, einsetzbar ist. Beispielweise, um den erfindungsgemäßen Retroreflektor in einem leicht modifizierten Design zu verwenden, ohne dass gleich eine neue Spritzgussform hergestellt werden muss. Hierzu kann es erforderlich sein, bereits beim Entformen den elastischen Bereich einer Hysteresekurve etwas zu verlassen und den Retroreflektor mit Hilfe einer festgelegten Kraft an die zweite Zielform anzupassen.

Die Seitenflächen der Tripel sind beispielsweise durch folgende Parameter charakterisierbar: eingeschlossener Winkel der Seitenflächen zueinander, Länge der Kanten der Seitenflächen, insbesondere Verhältnis der Kantenlängen innerhalb eines Tripels, Größe der Tripel, Verdrehungswinkel aller Seitenflächen eines Tripels um eine Achse, die zu allen aktiven Kanten eines Tripels den gleichen Winkel einschließt, Verkippungswinkel der Seitenflächen eines Tripels, sodass die Achse, die zu allen aktiven Kanten eines Tripels den gleichen Winkel einschließt nicht mehr kollinear zu einem Normalenvektor einer Grundfläche des Tripels steht. Aktive Kanten sind Kanten, die durch den Schnitt von jeweils zwei Seitenflächen eines Tripels gebildet werden. Bei gekrümmten Oberflächen ist hierbei der lokale Normalenvektor am Ort des Tripels maßgeblich. Der lokale Normalenvektor eines Tripels kann beispielsweise bestimmt werden, indem durch die lokalen Apices der benachbarten Tripel eine Ebene angefittet wird, deren Normalenvektor dem lokalen Normalenvektor entspricht.

Die Effekte kleiner Abweichungen der Winkel der Seitenflächen zueinander vom rechten Winkel, zum Beispiel um wenige Bogenminuten bis zum ca. 2° sind z.B. von P.R. Yoder Jr. im Artikel "study of Light Deviation Errors in Triple Mirrors and Tetrahedral Prisms" Journal of the optical Society of America Vol 48, Nr. 7 eingereicht am 2.1.1958, publiziert im Juli 1958 beschrieben. Wie von Gubela in der DE 102 16 579 A1 beschrieben, kann es für Weitwinkelanwendungen sinnvoll sein, Tripelflächen unterschiedlicher Größen zu verwenden. Für Anwendungen, bei denen seitlich beleuchtet wird, kann es sinnvoll sein, die Tripel um die Achse des Tripels zu drehen. Ein Beispiel für eine solche Verdrehung ist in Figur 8 der DE 44 10 994 C2 (Anmelder: Hans-Erich Gubela Senior) gegeben. Die Achse geht durch den Apex, also die Spitze des Tripels. Verkippungen der Seitenflächen können z.B. für schräg angebrachte Markierungsknöpfe im Straßenverkehr (siehe z.B. DE 10 2012 022 418 A1 Anmelder: Hans-Erich Gubela Senior) oder generell für schräg von oben angeleuchtete Flächen sinnvoll sein.

Übliche Schlüsselweiten, also Abstände zwischen zwei Spitzen, für Retroreflektoren sind 1 mm bis 6 mm. Häufig werden jedoch immer kleinere Tripel gewünscht. Beispielsweise sind kleinere Schlüsselweiten für Sensoranordnungen oder abbildende Systeme, bei denen ein Tripel einem Pixel entspricht, sinnvoll. Kleinere Tripelgrößen erhöhen zusätzlich die elastische Flexibilität eines erfindungsgemäßen Retroreflektors, weil sich dieTripel dann weniger gegenseitig den Weg versperren.

Mit neuen Verfahren wie mit dem Mikroschnittverfahren sind auch Spritzgussformen für Schlüsselweiten kleiner als 300 µm herstellbar. Somit können Retroreflektoren mit diesen Schlüsselweiten auch im Spritzgussverfahren hergestellt werden. Verkleinert man die Größe eines Tripels, so können bei kleinen Schlüsselweiten und damit auch bei kleinen Kantenlängen Beugungseffekte auftreten. Es wird bevorzugt, dass der Retroreflektor ein oder mehrere Tripel aufweist, deren Kanten der Seitenflächen eine Länge kleiner 400 µm, bevorzugt kleiner als 300 µm aber größer als 50 µm haben. Weiter wird bevorzugt, dass das erfindungsgemäße Abformwerkzeug mittels Mikroschneidens oder durch galvanische Abformung eines Mikroschnitts hergestellt ist.

Weiter ist es vorteilhaft, wenn die oben definierte Achse in radialer Richtung der gekrümmten Fläche, auf der der Retroreflektor gegossen wird oder die der Krümmung des Gegenstands, auf die der Retroreflektor aufgebracht werden soll, entspricht, weist. Das heißt, der Richtungsvektor der Achse, zeigt auf den Mittelpunkt eines Kreises der die gekrümmte Fläche berührt und dessen Radius dem Krümmungsradius der gekrümmten Fläche entspricht. Die Reflektionsrichtung und damit die gesehene Helligkeit passt sich so der Krümmung an.

Gemäß einem weiteren Aspekt der vorliegenden Erfindung weist der Retroreflektor mindestens zwei unterschiedliche Bereiche auf. Jedem Bereich lässt sich mindestens ein Tripel zuordnen. Vorteilhafterweise lässt sich jedem Tripel eine Vielzahl von Tripeln zuordnen. Jeder Bereich stellt eine Anordnung von Tripeln dar. Die Tripel des ersten Bereichs unterscheiden sich von den Tripeln des zweiten Bereichs in mindestens einem der folgenden Parameter: eingeschlossener Winkel der Seitenflächen zueinander, Länge der Kanten der Seitenflächen, insbesondere Verhältnis der Kantenlängen innerhalb eines Tripels, Größe der Tripel, Verdrehungswinkel aller Seitenflächen eines Tripels um die Achse, Verkippungswinkel der Seitenflächen eines Tripels. Dieser Parameter kann in einem der Bereiche beispielsweise einer vorgegebenen mathematischen Funktion folgen, die Beispielsweise vom Krümmungsradius, von einem Polarwinkel und/oder einem. Azimutalwinkel der gekrümmten Fläche abhängen kann. Neben interessanten visuellen Effekten ist z.B. eine Anwendung in Sicherheitselementen oder zur Kennzeichnung von gekrümmten Gegenständen oder zur Markierung von Gegenständen zur Darstellung in "virtuellen Realitäten" denkbar. Die Funktion kann gegebenenfalls mit einem Computer nach diesen Bedürfnissen berechnet werden.

Eine bevorzugte Geometrie, insbesondere bei variablen Parametern ist die Stranggeometrie wie sie z.B. in der DE 44 10 994 C2 (Anmelder: Hans-Erich Gubela Senior) beschrieben ist. Mit dieser Geometrie kann über den Schnittwinkel direkt Einfluss auf die fertigungstechnische Gestaltung der Parameter genommen werden. Dabei wird bevorzugt, dass der Retroreflektor aus mehreren Reflektorelementen aufgebaut ist, wobei jedes Reflektorelement zumindest abschnittsweise die Form eines Strangs aufweist, der ausgehend von einem Strangkörper mit rechteckigem Querschnitt ausgebildet ist, von dem unter Bildung einer in der Mitte des Strangkörpers beginnenden und in Längsrichtung des Strangs verlaufenden Schräge ein im Querschnitt dreieckiger Abschnitt entfernt ist, und der quer zur Längsrichtung mit von der Schräge ausgehenden Kerben versehen ist, so dass die die Kerben begrenzenden Flächen zusammen mit der Schräge die Tripel einer Reihe bilden.

Vorteilhafterweise ist ein integriertes optisches Bauteil mit einem erfindungsgemäßen Retroreflektor aus einem Guss gefertigt. Das heißt, es muss nicht verschweißt, verschmolzen oder in einer sonstigen Weise verbunden werden. Somit sind auch keine Nähte vorhanden, die die optischen Eigenschaften des Bauteils verschlechtern können.

Ein solches integriertes optisches Bauteil kann beispielsweise ein Scheinwerferelement, insbesondere ein Scheinwerferelement für Kraftfahrzeuge sein. Es wäre dann unnötig ein Scheinwerferelement zusätzlich beispielsweise mit einer retroreflektierenden Folie auszustatten. Stattdessen wird das Tripel beim Verguss eines Leuchtmittels, wie beispielsweise einer LED oder einer Halogenlampe mit produziert. Ein Scheinwerferelement weist üblicherweise eine Lichtaustrittsfläche auf. An der Lichtaustrittsfläche tritt das im Scheinwerfer erzeugte Licht in die Umgebung aus. Eine der Lichtaustrittsfläche gegenüberliegende Fläche kann als Rückseite bezeichnet werden. Vorteilhafterweise befindet sich ein erfindungsgemäßer Retroreflektor an der Rückseite des Scheinwerferelements. Damit kann sowohl in das Scheinwerferelement einfallendes Licht reflektiert werden als auch von erzeugtes Licht in eine gewünschte Richtung gelenkt werden. Die Tripel können bei geeigneter Konstruktion gleichzeitig die Oberfläche vergrößern und so als Kühlluftkanäle für LED dienen. Dabei ist darauf zu achten, dass Kühlluftkanäle mit einer wärmeleitenden Schicht versehen sind, da Silikon als Wärmeisolator nicht in der Lage ist Wärme abzuleiten. An den Flächen, die nicht zur Wärmeleitung benötigt werden, kann auf eine Verspiegelung verzichtet werden und die Tripel reflektieren auf Grund der internen Totalreflexion.

Ein anderes Beispiel für ein integriertes optisches Bauteil ist z.B. ein Operationsmarker. Ein Arzt kann den beispielsweise vor einer Operation Marker an dem zu operierenden Körperteil und an Instrumenten anbringen, um während des Eingriffs auf einem Bildschirm exakt die Position seiner Instrumente lokalisieren zu können.

Der erfindungsgemäße Retroreflektor kann vorteilhaft verwendet werden, um in einer Sensorvorrichtung von einer Lichtquelle ausgesandtes ultraviolettes Licht, insbesondere mit einer Wellenlänge von ungefähr 300 nm (naher UV-Bereich), zu einem Lichtempfänger zu retroflektieren. Solche Sensorvorrichtungen können insbesondere zur Detektion von im sichtbaren Bereich kristallklaren Gegenständen im Strahlengang verwendet werden.

Die nachfolgenden Figuren sollen die Erfindung verdeutlichen. Es zeigen:
- Figur 1: Eine übliche Retroreflektorgeometrie
- Figur 2: Ein einzelnes Tripel, zur Erläuterung einer Hinterschneidung
- Figur 3: eine beispielhafte Retroreflektion an gekrümmten Oberflächen
- Figur 4: ein Beispiel einer retroreflektierenden Halbkugel
- Figur 5: ein Formeinsatz für eine Halbkugel nach Figur 4 in geschlossenem Zustand
- Figur 6: ein Formeinsatz für eine Halbkugel nach Figur 4 in einer Ansicht schräg von vorne
- Figur 7: typische Winkelverteilungen für Tripel an einer ebenen Oberfläche, bzw. einer gekrümmten Oberfläche
- Figur 8: Aufbringung eines elastischen Reflektors an eine gekrümmte Oberfläche
- Figur 9: eine schematische Darstellung eines Retroreflektors

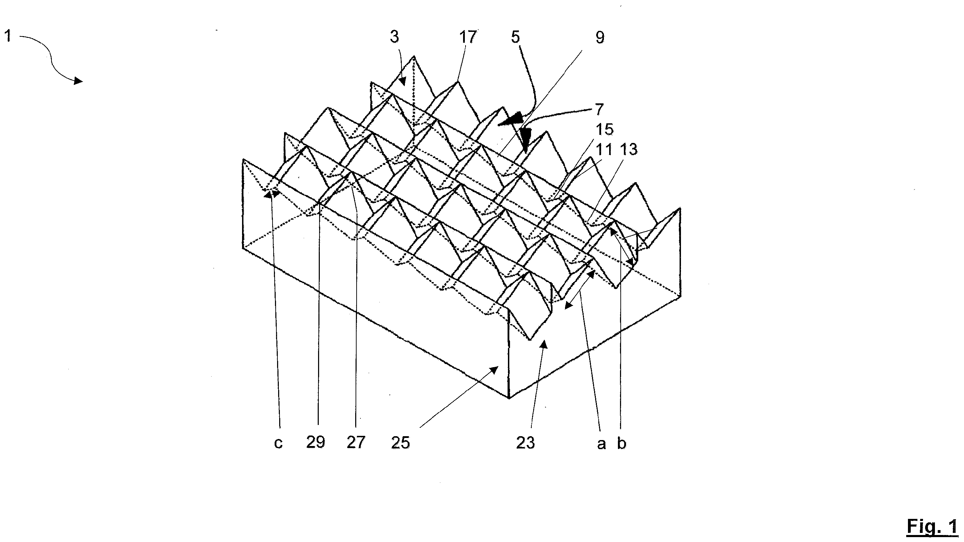

**Figur 1** zeigt eine übliche Geometrie eines Retroreflektors 1 wie z.B. in der DE 102 16 579 A1 beschrieben. Der Retroreflektor 1 wird durch eine regelmäßige Anordnung einzelner Tripel 3 gebildet. Jedes Tripel 3 hat drei optisch aktive Grenzflächen, an denen ein Übergang von einem optisch dichteren Medium also einem Material mit höherem Brechungsindex zu einem optisch dünneren Medium also einem Material mit niedrigerem Brechungsindex oder ein umgekehrter Übergang stattfinden kann. Diese Grenzflächen können auch als Seitenflächen 5, 7, 9 bezeichnet werden. In einer üblichen Geometrie tritt Licht an einer der Reflektorseite gegenüberliegenden Lichteintrittsfläche in das optisch dichtere Medium ein und trifft unter einem Winkel auf die Tripel 3, unter denen Totalreflektion stattfindet. Der Lichtstrahl wird an jeder der Seitenflächen 5, 7, 9 einmal reflektiert. Bei jeder Reflektion ändert eine Komponente des Ausbreitungsvektors ihr Vorzeichen. Nach dreifacher Reflektion verlässt der Lichtstrahl 29 den Retroreflektor 1 wieder parallel zur Richtung des einfallenden Strahls 27.

Dabei schließen die Flächen 5, 7 und 9 untereinander einen rechten Winkel ein. Im Beispiel der Figur 1 schneiden sich die Flächen 5 und 7 in der Kante 11 mit der Kantenlänge a, die Flächen 5 und 9 in der Kante 13 mit der Kantenlänge b und die Flächen 7 und 9 in der Kante 15 mit der Kantenlänge c. Der Schnittpunkt aller drei Flächen 5, 7, 9 bildet den Apex 17. Durch den Apex 17 lässt sich eine Symmetrieachse 19 legen, die zu allen Seitenflächen 5, 7, 9 den gleichen Winkel einschließt. Wie aus Figur 1 ersichtlich ist, sind die Tripel 3 leicht schräg gestellt. Es liegt also eine Verkippung 23 vor. Die Achse 19 der Tripel 3 ist nicht parallel zu einem Normalenvektor einer Ebene 25, in der die Tripel angeordnet sind.

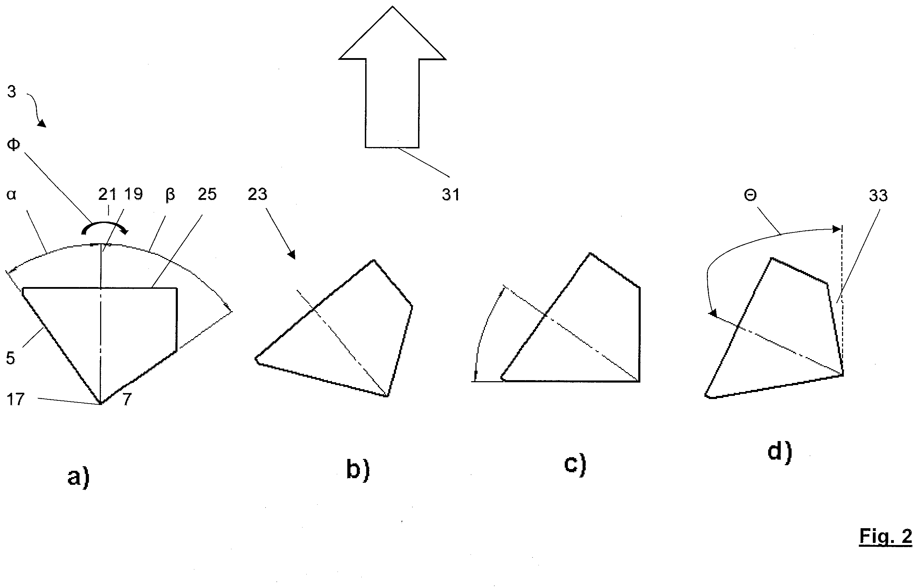

**Figur 2** zeigt eine Draufsicht auf ein einzelnes Tripel 3 eines Retroreflektors 1 wie in Figur 1. In **Figur 2 a)** ist ein Tripel ohne Verkippung dargestellt. Die Symmetrieachse 19 ist kollinear mit einem Normalenvektor einer Ebene 25 der Tripel gemäß Figur 1. Eine mögliche Verdrehung 21 des Tripels 3 um die Achse 19 ist durch einen Pfeil mit dem Bezugszeichen des Verdrehungswinkels Φ angedeutet. Der Winkel α der ersten Seitenfläche 5 zur Symmetrieachse 19 des Tripels 3 beträgt 35,26 °. Der Winkel β der zweiten Seitenfläche 5 zur Symmetrieachse 19 des Tripels 3 entspricht dem Winkel der Diagonale eines Würfels und beträgt 54,74°. Die Summe von α und β und damit der Schnittwinkel der ersten Seitenfläche 5 mit der zweiten Seitenfläche 7 beträgt genau 90°. Die dritte Seitenfläche 9 liegt hier in der Zeichenebene und schließt mit den beiden anderen Seitenflächen 5, 7 ebenfalls einen rechten Winkel ein.

Die **Figuren 2 b)** **bis d)** zeigen den Tripel mit drei verschiedenen Verkippungswinkeln Θ. In **Figur 2 b)** ist der Verkippungswinkel Θ kleiner als 54,74 °in Figur 2 c beträgt der Verkippungswinkel Θ genau 54,74°. D.h. die erste Seitenfläche 5 liegt koplanar zur Ebene 25 der Tripel. In Figur 2 d) ist der Verkippungswinkel Θ größer als 54,74°. Es versteht sich, dass die Tripel auch kombiniert verdreht 21 und verkippt 23 werden können.

Die in den **Figuren 2 b)** **und 2 c)** dargestellten Tripel 3 lassen sich in einer Entformungsrichtung 31 ohne Hinterschneidung aus einem gedachten Werkzeug entformen. Der in **Figur 2 d)** dargestellte Tripel 3 weist eine Hinterschneidung 33 auf. Der mit 33 bezeichnete Bereich ist senkrecht zur Entformungsrichtung 31 der Entformung entgegen. Der in Figur 2 d) dargestellte Tripel kann also nur entformt werden, wenn er erfindungsgemäß aus einem elastischen Material, beispielsweise Silikon, besteht.

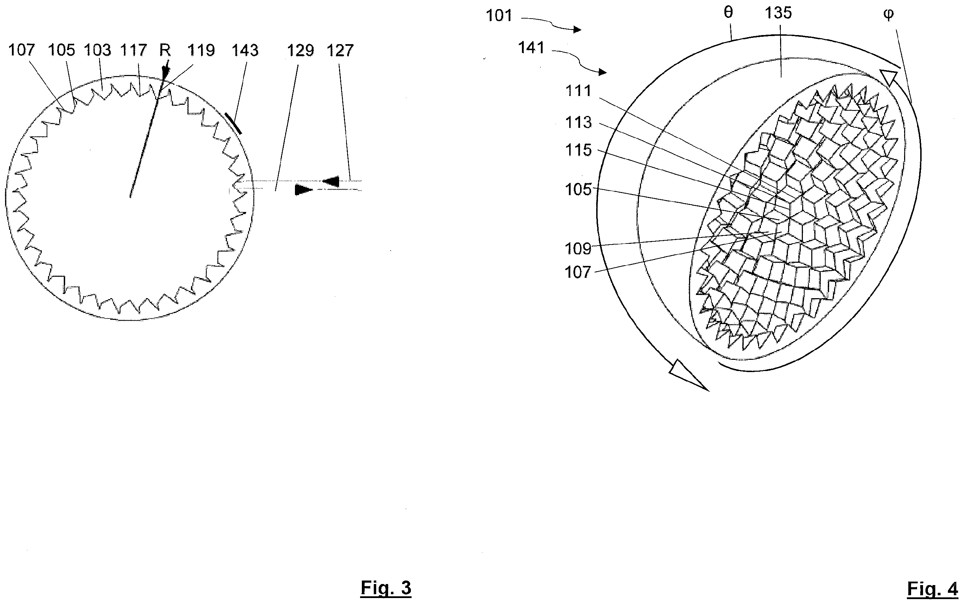

**Figur 3** zeigt beispielhaft die Retroreflektion an einer gekrümmten Oberfläche 135. In der Ansicht der Figur 3 sind nur zwei der Seitenflächen 105, 107 der Tripels 103 dargestellt. Einfallendes Licht 127 trifft zuerst auf die Seitenfläche 105, wird dort reflektiert und trifft dann auf die Seitenfläche 107 und wird dort reflektiert. Die Reflektion an der Seitenfläche 109 ist nicht dargestellt. Die Reihenfolge des Auftreffens des einfallenden Lichtstrahls 127 auf die Seitenflächen 105, 107, 109 kann beliebig permutiert sein. In Figur 3 ist der Bereich der Lichteintrittsfläche, der genau einen Tripel 103 beleuchtet, als Apertur 143 mit einem Pfeil gekennzeichnet. Weil die Oberfläche 135 gekrümmt ist, ist auch die Apertur 143 gekrümmt. Damit der Versatz bei der Retroreflektion des Lichtstrahls keine Richtungsänderung des reflektierten Strahls 129 gegenüber dem einfallenden Strahl 127 bewirkt, muss der Radius der Kugel oder allgemein der lokale Krümmungsradius der gekrümmten Fläche 135 mindestens um den Faktor 10, bevorzugt mindestens um den Faktor 50, besonders bevorzugt mindestens um den Faktor 100 mal so groß sein wie die größte Kantenlänge des Tripels Außerdem ist beispielhaft dargestellt, dass die Achse 119 des Tripels 103 in radialer Richtung R weist.

**Figur 4** zeigt die Ansicht des Retroreflektors 101 in Gestalt einer Halbkugel 141 dargestellt. Die gekrümmte Flache 135 hat also eine sphärische Form. Die gekrümmte Fläche 135 lässt sich folglich durch ein Kugelkoordinatensystem mit einem Radialvektor R (siehe Figur 3), einem Polarwinkel ϕ und einem Azimutwinkel θ darstellen. Es liegen also zwei Krümmungsrichtungen vor. In dieser Ansicht sind alle Seitenflächen 105, 107, 109 eines Tripels 103 sowie die Kanten 111, 113, 115 sichtbar. Die Kanten 111, 113, 115 schneiden sich im Apex 117. Die Tripel 103 sind im Verhältnis zum Halbkugelradius der Erkennbarkeit wegen deutlich zu groß gezeichnet. Setzt man zwei solcher Bauteile am Umfang zusammen, ergibt sich eine annähernd unter dem Raumwinkel 4π reflektierende Vollkugel. Solche Kugeln passenden Durchmessers können z.B. als Operationsmarker eingesetzt werden.

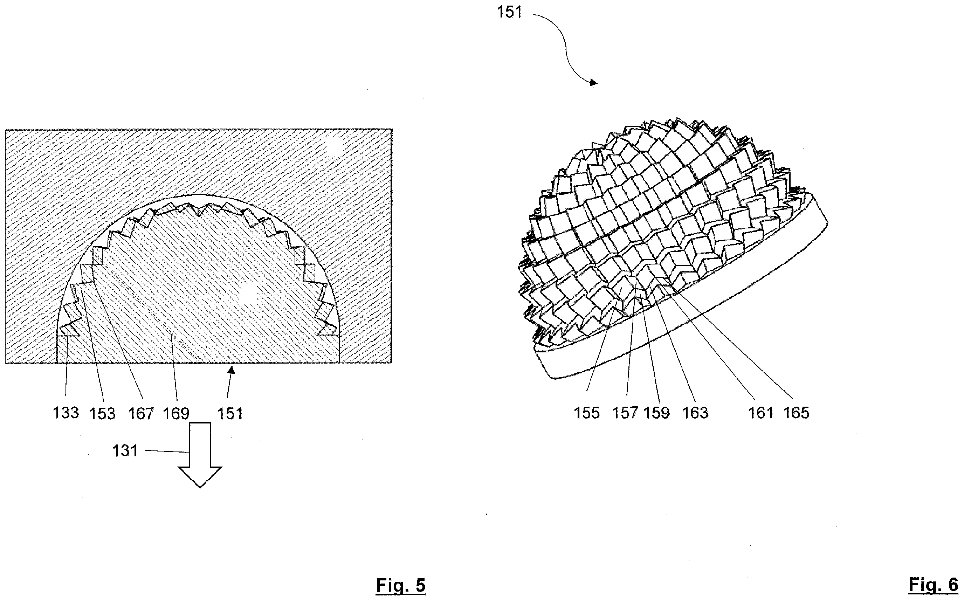

**Die** **Figuren 5 und** 6 zeigen eine Form mit einem Formeinsatz 151 zur Herstellung eines Retroreflektors 101 aus Figur 4. Die erste Abformfläche 155 eines Tripels 153 des Formeinsatzes 151 entspricht der ersten Seitenfläche 105 eines Tripels 103 des Retroreflektors 101. Die Bezugszeichen des Formeinsatzes 151 unterscheiden sich von den Bezugszeichen des Retroreflektors 101 um jeweils 50. Entsprechendes gilt für die Flächen 157 und 159, die Kanten 161, 163, 165, das Tripelzentrum 167 und die Symmetrieachse 169 des Tripels 153.

**In** **Figur 5** ist die Form in einem geschlossenen Zustand gezeigt. Eine Entformungsrichtung 131 ist senkrecht zur planen Grundfläche des Formwerkzeuges. Deutlich erkennbar sind im unteren Bereich nahe der Grundplatte des Formwerkzeuges Hinterschneidungen 133. Aus Übersichtlichkeitsgründen wurde auf eine Darstellung einer Heizung der Form, die zum Aushärten des Silikons benötigt wird, verzichtet.

**Figur 6** zeigt den Formeinsatz in geöffnetem Zustand.

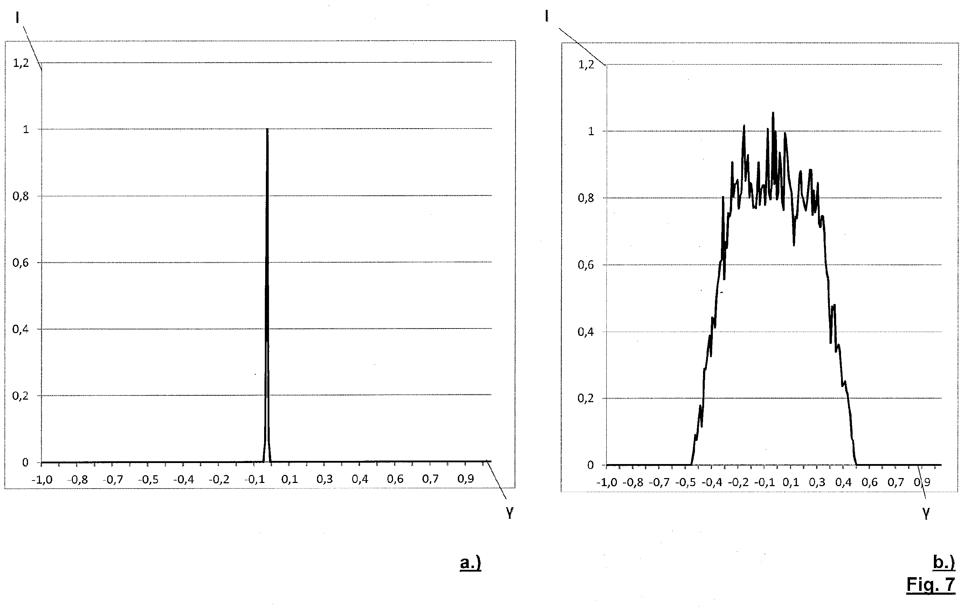

**In** **Figur 7** ist eine Intensitätsverteilung I in willkürlichen Einheiten über einem Beobachtungswinkel γ aufgetragen. Figur 7 a) zeigt die Winkelverteilung des retroreflektierten Lichtes bei einem idealen Tripel bei planer Aperturfläche. Die Halbwertsbreite ist bis auf darstellungsbedingte Auflösung Null. Figur 7 b) zeigt die Winkelverteilung für denselben idealen Tripel aber mit gekrümmter Aperturfläche 143 (siehe Figur 3). Der Krümmungsradius ist hier so gewählt, dass sich etwa eine Halbwertsbreite der Winkelverteilung von 0.5° ergibt.

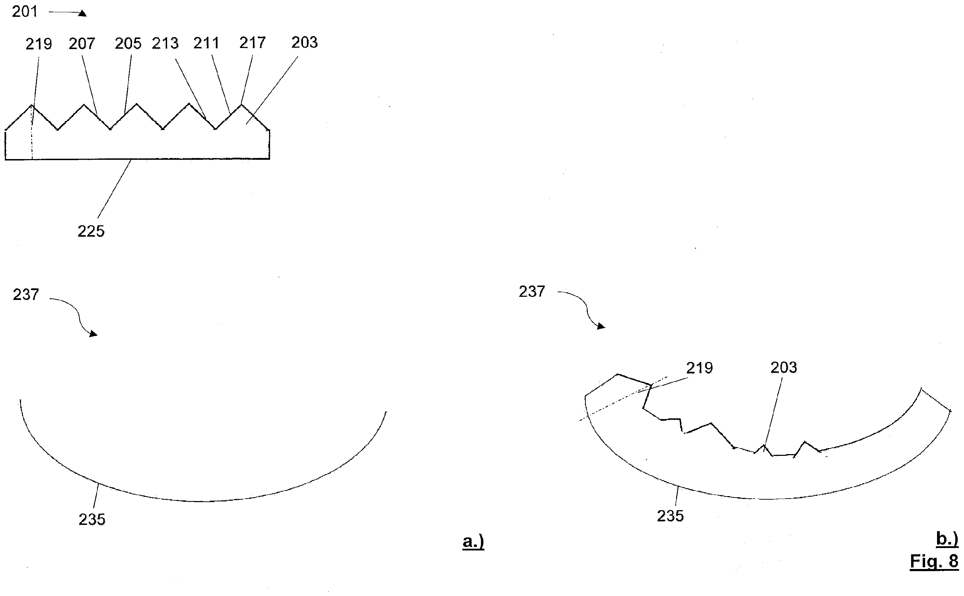

**Figur 8** zeigt symbolisch in zwei Dimensionen dargestellt die Anpassung eines in einer planen Ebene gespritzten elastischen Retroreflektors 201 an eine gekrümmte Fläche 235 eines Gegenstands 237. **Figur 8 a)** zeigt dabei den Retroreflektor 201, bevor er auf den Gegenstand 237 aufgebracht wird. **Figur 8** **b**) zeigt den Retroreflektor 201 und den Gegenstand 237 nach Aufbringung des Retroreflektors. In Figur 8 sind insbesondere die Größen der Tripel 203 stark übertrieben dargestellt. Dadurch sind auch die Verformungen insbesondere der Tripel 203 in Figur 8 b) stark übertrieben dargestellt. In der Realität ist ein lokaler Krümmungsradius der gekrümmten Fläche 235 um mindestens den Faktor 50, besser noch um mindestens den Faktor 100, größer als die Kantenlängen bzw. Schlüsselweiten der Tripel 203.

In Figur 8 sind wegen der symbolischen zweidimensionalen Darstellung nur jeweils zwei Seitenflächen 205, 207, bzw. zwei Kanten 211, 213 eines Tripels 203 eingezeichnet. Die Kanten schneiden sich im Apex 217. Die Symmetrieachse 219, die durch den Apex 217 geht und mit den Seitenflächen 205, 207 den gleichen Winkel einschließt, liegt in Figur 8 a), also vor dem Anbringen des elastischen Retroreflektors 201 an dem Gegenstand 237, parallel zu dem Normalenvektor einer Ebene 225. Die Ebene 225 entspricht einer planen Wand in einer nicht dargestellten Spritzgussform. Nach dem Aufbringen folgt die Symmetrieachse 219 im Beispiel der Figur 8 b) der gekrümmten Fläche 235 des Gegenstands 237. Die in Figur 8 b) übertrieben dargestellten elastischen Deformationen des Retroreflektors 201 können sich einerseits negativ auf das Reflektionsverhalten des Reflektors auswirken, können aber andererseits auch zum Erreichen z.B. einer gewünschten Winkelverteilung nutzbar gemacht werden.

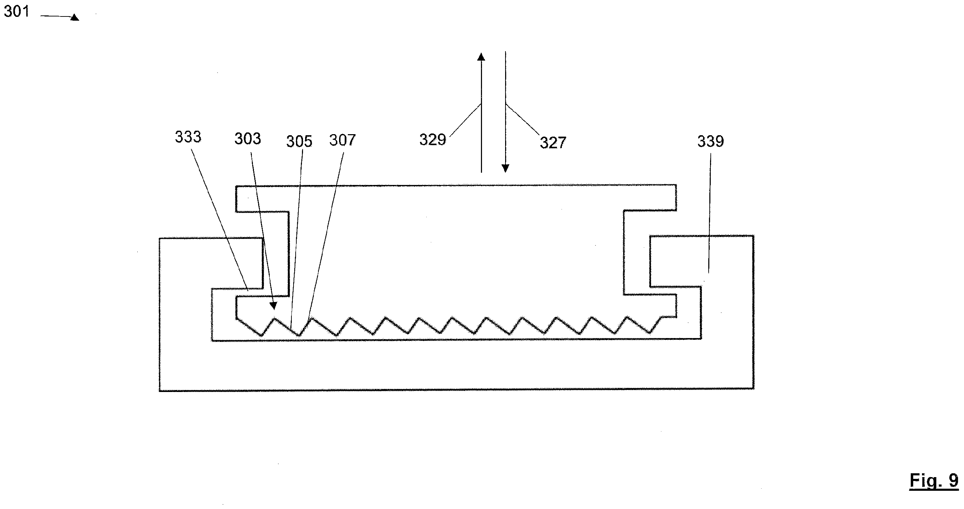

**Figur 9** zeigt eine schematische 2d- Darstellung eines erfindungsgemäßen Retroreflektors 301, der für die Verwendung in einer Sensorsoreinrichtung vorgesehen ist, in der von einer nicht dargestellten Lichtquelle ausgesandtes ultraviolettes Licht, also ein einfallender Strahl 327 z.B. mit einer Wellenlänge von 280 nm, zu einem nicht dargestellten Lichtempfänger als retroflektierter Strahl 329 gelenkt wird. Der Retroreflektor 301 weist eine Anordnung von Tripeln 303 mit jeweils drei nahezu senkrecht aufeinanderstehenden Seitenflächen auf, von denen eine erste Seitenfläche 305 und eine zweite Seitefläche 307 dargestellt sind.

Der Retroreflektor 301 in Figur 9 ist nicht gekrümmt also flach ausgestaltet. Dennoch kann die elastische Eigenschaft des Silikons genutzt werden, um eine Hinterschneidung 333 des Retroreflektors 301 oder vorzugsweise eine Nut, in eine Halterung 339, vorzugsweise eine starre Halterung 339, eindrücken oder darüberzustülpen.

Am Ort der Hinterschneidung 333 oder der Nut kann der Retroreflektor 301 an der Halterung befestigt werden. Dank des elastischen Materials des Silikons kann damit eine geschlossene Rückfläche geschaffen werden. Auf ein Verschweißen kann somit verzichtet werden.

**Bezugszeichenliste:**

| | |
|---|---|
| 1, 101, 201, 301 | Retroreflektor |
| 3, 103, 203, 303 | Tripel |
| 5, 105, 205, 305 | Erste Seitenfläche |
| 7, 107, 207, 307 | Zweite Seitenfläche |
| 9, 109 | Dritte Seitenfläche |
| 11, 111, 211 | Erste Kante |
| 13, 113, 213 | Zweite Kante |
| 15, 115 | Dritte Kante |
| 17, 117, 217 | Apex |
| 19,119,219 | Achse |
| 21 | Verdrehung |
| 23 | Verkippung |
| 25, 225 | Ebene |
| 27, 127, 327 | Einfallendes Licht |
| 29, 129, 329 | Reflektierter Strahl |
| 31, 131 | Entformungsrichtung |
| 33, 133, 333 | Hinterschneidung |
| 135, 235 | gekrümmte Fläche |
| 237 | Gegenstand |
| 339 | Halterung |
| 141 | retroreflektierende Halbkugel |
| 143 | Aperturfläche eines Tripels |
| 151 | Formeinsatz |
| 153 | Tripel |
| 155 | Erste Abformfläche |
| 157 | Zweite Abformfläche |
| 159 | Dritte Abformfläche |
| 161 | Erste Kante |
| 163 | Zweite Kante |
| 165 | Dritte Kante |
| 167 | Tripelzentrum |
| 169 | Symmetrieachse |
| a,b,c | Kantenlänge der ersten, zweiten und dritten Kante |
| I | Intensität der reflektierten Strahlung in willkürlichen Einheiten |
| R | Radialvektor einer retroreflektierenden Halbkugel |
| α, β | Winkel der Kanten im Werkzeug |
| γ | Beobachtungswinkel |
| Φ | Verdrehungswinkel der Tripel |
| Θ | Verkippungswinkel der Tripel |
| ϕ | Polarwinkel der gekrümmten Fläche |
| θ | Azimutalwinkel der gekrümmten Fläche |

## Patentansprüche

1. Retroreflektor (1, 101, 201, 301) umfassend eine Anordnung aus einer Vielzahl von totalreflektierenden Tripeln (3, 103, 203) mit jeweils drei Seitenflächen (5, 7, 9, 105, 107, 109, 205, 207),
wobei die Seitenflächen (5, 7, 9, 105, 107, 109, 205, 207) würfel-eckenartig angeordnet sind und zueinander einen Winkel zwischen 85° und 95° einschließen,
wobei der Retroreflektor (1, 101, 201, 301) mittels Spritzguss aus einem Trägermaterial hergestellt ist, und wobei das Trägermaterial ein optisches transparentes Silikonharz, vorzugsweise ein Silikonharz basierend auf Polydimethylsiloxan ist, welches im Bereich des sichtbaren Lichts sowie im nahen Infrarotbereich bei 2 mm Dicke eine Transmissivität von mindestens 95 % aufweist,
wobei der Retroreflektor (101) auf einer gekrümmten Fläche (135), nämlich einer sphärischen, ellipsoiden, toroidalen, hyperbolischen oder paraboloidartigen Fläche (135), die einen Raumwinkel größer π Steradiant, bevorzugt einen Raumwinkel größer oder gleich 2 π Steradiant umfasst, oder einer zylinder- oder kegelförmigen Fläche, vorzugsweise mit einem Polarwinkel größer 180° aus einem Stück gefertigt ist, wobei die Fläche Hinterschneidungen (133) aufweist, und wobei der Retroreflektor (101) aus einer zu seiner Herstellung verwendeten Spritzgussform entformbar bleibt.

2. Retroreflektor (101) nach Anspruch 1, **dadurch gekennzeichnet, dass** die Form der gekrümmten Fläche (135) an eine vorgebebene erste Zielform, beispielsweise die Form eines Autoscheinwerfers angepasst ist, jedoch auch in einer zweiten Zielform, die von der ersten Zielform abweichen kann einsetzbar ist.

3. Retroreflektor (1, 101, 201, 301) nach einem der Ansprüche 1 bis 2, **dadurch gekennzeichnet, dass** der Schnitt zweier Seitenflächen (5, 7, 9, 105, 107, 109, 205, 207) jeweils eine Kante (11, 13, 15, 111, 113, 115, 211, 213, 215) mit einer Kantenlänge (a, b, c) bildet und sich alle drei Kanten (11, 13, 15, 111, 113, 115, 211, 213, 215) eines Tripels (3, 103, 203), bzw. ggf. ihre Verlängerung in einem Apex (17, 117, 217) schneiden,
wobei die Seitenflächen (5, 7, 9, 105, 107, 109, 205, 207) der Tripel (3, 103, 203) durch folgende Parameter (a, b, c, Φ, Θ) charakterisierbar sind: eingeschlossener Winkel der Seitenflächen zueinander, Länge (a, b, c) der Kanten (11, 13, 15, 111, 113, 115, 211, 213, 215) der Seitenflächen (5, 7, 9, 105, 107, 109, 205, 207), insbesondere Verhältnis der Kantenlängen innerhalb eines Tripels (3, 103, 203), Größe der Tripel (3, 103, 203), Verdrehungswinkel (Φ) aller Seitenflächen (5, 7, 9, 105, 107, 109, 205, 207) eines Tripels (3, 103, 203) um eine Achse (19, 119, 219), die zu allen aktiven Kanten (11, 13, 15, 111, 113, 115, 211, 213, 215) eines Tripels (3, 103, 203) den gleichen Winkel einschließt, Verkippungswinkel (Θ) der Seitenflächen (5, 7, 9, 105, 107, 109, 205, 207) eines Tripels (3, 103, 203), sodass die Achse (19, 119, 219), die zu allen aktiven Kanten (11, 13, 15, 111, 113, 115, 211, 213, 215) eines Tripels (3, 103, 203) den gleichen Winkel einschließt nicht mehr kollinear zu einem Normalenvektor einer Grundfläche des Tripels (3, 103, 203) steht.

4. Retroreflektor (1, 101, 201, 301) nach einem der Ansprüche 2 oder 3, **dadurch gekennzeichnet, dass** eine Achse, die zu allen aktiven Kanten des Tripels (3, 103, 203) den gleichen Winkel einschließt, in radialer Richtung (R) der gekrümmten Fläche weist, wobei die aktiven Kanten durch den Schnitt von jeweils zwei Seitenflächen (5, 7, 9, 105, 107, 109, 205, 207) eines Tripels gebildet werden.

5. Retroreflektor (1, 101, 201, 301) nach einem der Ansprüche 2 bis 4, **dadurch gekennzeichnet, dass** der Retroreflektor (1, 101, 201, 301) mindestens einen ersten Bereich und einen zweiten Bereich aufweist, wobei sich jedem Bereich mindestens ein Tripel (3, 103, 203) zuordnen lässt, wobei sich der oder die Tripel (3, 103, 203) des ersten Bereichs von der oder den Tripeln (3, 103, 203) des zweiten Bereichs in mindestens einem der in Anspruch 3 genannten Parameter (a, b, c, Φ, Θ) unterscheidet.

6. Retroreflektor (1, 101, 201, 301) nach Anspruch 5, **dadurch gekennzeichnet, dass** der Parameter (a, b, c, Φ, Θ), in dem sich die Bereiche unterscheiden, als Funktion eines Krümmungsradius und/oder eines Polarwinkels (ϕ) und/oder eines Azimutwinkels (θ) der gekrümmten Fläche (135, 235) darstellbar ist.

7. Integriertes optisches Bauteil aus Silikon, **dadurch gekennzeichnet, dass** an mindestens einer Stelle ein Retroreflektor (1, 101, 201, 301) nach einem der Ansprüche 1 bis 6 enthalten ist.

8. Integriertes optisches Bauteil nach Anspruch 7, **dadurch gekennzeichnet, dass** das Bauteil aus einem Guss gefertigt ist und keine Nähte aufweist.

9. Integriertes optisches Bauteil nach einem der Ansprüche 7 oder 8, **dadurch gekennzeichnet, dass** das Bauteil ein Scheinwerferelement ist und dass sich der Retroreflektor (1, 101, 201, 301) vorzugsweise an einer rückseitigen, an einer einer Lichtaustrittsfläche abgewandten Oberfläche des Scheinwerferelements befindet.

10. Integriertes optisches Bauteil nach einem der Ansprüche 7 oder 8, **dadurch gekennzeichnet, dass** das Bauteil ein Operationsmarker zur Anbringung an einem zu operierenden Körperteil oder einem Operationsinstrument ist.

11. Abformwerkzeug als Bestandteil einer Spritzgussform zur Herstellung eines Retroreflektors (1, 101, 201, 301) nach einem der Ansprüche 1 bis 6 oder zur Herstellung eines optischen Bauteils nach einem der Ansprüche 7 bis 10 mit einem von einer Werkzeugoberfläche begrenzten Werkzeugkörper, wobei die Werkzeugoberfläche eine Vielzahl von Tripeln (153) aufweist, welche jeweils drei aneinander angrenzende, sich unter einem Winkel zwischen 85° und 95° vorzugsweise zwischen 89° und 91°, besonders bevorzugt zwischen 89° 58' und 90° 2' gegenseitig schneidende Abformflächen (155, 157, 159) aufweisen, wobei die Abformflächen (155, 157, 159) jedes Tripels (153) an einem Tripelzentrum (167) aneinanderstoßen, durch das die Symmetrieachse (169) des jeweiligen Tripels (153) verläuft,
wobei der Werkzeugkörper beheizbar ist und wobei der Werkzeugkörper mindestens ein Werkzeugelement aufweist, das senkrecht zu einer Entformrichtung stehend einer Entformung entgegensteht.

## Claims

1. Retroreflector (1, 101, 201, 301) comprising an arrangement composed of a plurality of totally reflective triples (3, 103, 203), each having three side surfaces (5, 7, 9, 105, 107, 109, 205, 207),
wherein the side surfaces (5, 7, 9, 105, 107, 109, 205, 207) are disposed in the manner of cube corners and enclose an angle between 85° and 95° between each other,
wherein the retroreflector (1, 101, 201, 301) is produced from a carrier material by means of injection molding,
and wherein the carrier material is an optically transparent silicone resin, preferably a silicone resin based on polydimethylsiloxane, which has a transmissivity of at least 95% in the range of visible light as well as in the near infrared range, at a thickness of 2 mm, wherein the retroreflector (101) is produced on a curved surface (135), namely a spherical, ellipsoid, toroidal, hyperbolic or parabola-type surface (135), which comprises a spatial angle greater than π steradian, preferably a spatial angle greater than or equal to 2 π steradian, or on a cylindrical or cone-shaped surface, preferably having a polar angle greater than 180°, in one piece, wherein the surface has undercuts (133), and wherein the retroreflector (101) can still be unmolded from an injection-molding mold that is used for its production.

2. Retroreflector (101) according to claim 1, **characterized in that** the shape of the curved surface (135) is adapted to a predetermined first target shape, for example the shape of an automobile headlight, but can also be used in a second target shape, which can deviate from the first target shape.

3. Retroreflector (1, 101, 201, 301) according to one of claims 1 to 2, **characterized in that** the intersection of two side surfaces (5, 7, 9, 105, 107, 109, 205, 207) forms an edge (11, 13, 15, 111, 113, 115, 211, 213, 215) having an edge length (a, b, c), in each instance, and that all three edges (11, 13, 15, 111, 113, 115, 211, 213, 215) of a triple (3, 103, 203), or, if applicable, their extensions intersect in an apex (17, 117, 217),
wherein the side surfaces (5, 7, 9, 105, 107, 109, 205, 207) of the triples (3, 103, 203) can be **characterized by** the following parameters (a, b, c, Φ, Θ): the enclosed angle of the side surfaces relative to one another, the length (a, b, c) of the edges (11, 13, 15, 111, 113, 115, 211, 213, 215) of the side surfaces (5, 7, 9, 105, 107, 109, 205, 207), in particular the ratio of the edge lengths within a triple (3, 103, 203), the size of the triples (3, 103, 203), the angle of rotation (Φ) of all the side surfaces (5, 7, 9, 105, 107, 109, 205, 207) of a triple (3, 103, 203) about an axis (19, 119, 219) that encloses the same angle relative to all the active edges (11, 13, 15, 111, 113, 115, 211, 213, 215) of a triple (3, 103, 203), the tilt angle (Θ) of the side surfaces (5, 7, 9, 105, 107, 109, 205, 207) of a triple (3, 103, 203), so that the axis (19, 119, 219), which encloses the same angle relative to all the active edges (11, 13, 15, 111, 113, 115, 211, 213, 215) of a triple (3, 103, 203) no longer stands collinear to a normal line vector of a base surface of the triple (3, 103, 203).

4. Retroreflector (1, 101, 201, 301) according to one of claims 2 or 3, **characterized in that** an axis that encloses the same angle relative to all the active edges of the triple (3, 103, 203) points in the radial direction (R) of the curved surface, wherein the active edges are formed by the intersection of two side surfaces (5, 7, 9, 105, 107, 109, 205, 207) of a triple, in each instance.

5. Retroreflector (1, 101, 201, 301) according to one of claims 2 to 4, **characterized in that** the retroreflector (1, 101, 201, 301) has at least a first region and a second region, wherein at least one triple (3, 103, 203) can be assigned to each region, wherein the triple or the triples (3, 103, 203) of the first region differ(s) from the triple or the triples (3, 103, 203) of the second region in at least one of the parameters (a, b, c, Φ, Θ) mentioned in claim 3.

6. Retroreflector (1, 101, 201, 301) according to claim 5, **characterized in that** the parameter (a, b, c, Φ, Θ) by which the regions differ can be represented as a function of a curvature radius and/or of a polar angle (ϕ) and/or of an azimuth angle (θ) of the curved surface (135, 235).

7. Integrated optical component made of silicone, **characterized in that** a retroreflector (1, 101, 201, 301) according to one of claims 1 to 6 is contained in at least one location.

8. Integrated optical component according to claim 7, **characterized in that** the component is produced from a casting and does not have any seams.

9. Integrated optical component according to one of claims 7 or 8, **characterized in that** the component is a headlight element and **in that** the retroreflector (1, 101, 201, 301) is preferably situated on a rear-side surface, i.e. on a surface that faces away from the light exit surface, of the headlight element.

10. Integrated optical component according to one of claims 7 or 8, **characterized in that** the component is an operation marker for affixing on a body part on which the operation is to take place or on an instrument used for operations.

11. Forming die as a part of an injection-moulding mould for the production of a retroreflector (1, 101, 201, 301) according to one of claims 1 to 6 or for the production of an optical component according to one of claims 7 to 10, having a die body delimited by a die surface, wherein the die surface has a plurality of triples (153), which each have three forming surfaces (155, 157, 159) that border on one another and intersect one another at an angle between 85° and 95°, preferably between 89° and 91°, particularly preferably between 89° 58' and 90° 2', wherein the forming surfaces (155, 157, 159) of each triple (153) come together in a triple center (167), through which the axis of symmetry (169) of the respective triple (153) runs,
and wherein the tool body can be heated,
wherein the die body has at least one die element that stands perpendicular to an unmolding direction and counters unmolding.

## Revendications

1. Rétroréflecteur (1, 101, 201, 301) doté d'un ensemble constitué d'une multiplicité de triplets (3, 103, 203) à réflexion totale comptant, à chaque fois, trois faces latérales (5, 7, 9, 105, 107, 109, 205, 207),
lesquelles faces latérales (5, 7, 9, 105, 107, 109, 205, 207) sont agencées à la manière de coins d'un cube et décrivent, entre elles, un angle compris entre 85° et 95°,
le rétroréflecteur (1, 101, 201, 301) étant fabriqué par moulage par injection en un matériau substrat, et ledit matériau substrat étant une résine de silicone optique transparente, de préférence une résine de silicone à base de polydiméthylsiloxane présentant dans la plage de lumière visible, ainsi que dans la plage des infrarouges proches, une faculté transmissive d'au moins 95 % pour une épaisseur de 2 mm,
sachant que le rétroréflecteur (101) est produit d'un seul tenant sur une surface courbe (135), à savoir une surface sphérique, ellipsoïdale, toroïdale, hyperbolique ou de type paraboloïdal qui inclut un angle solide excédant π stéradian, préférentiellement un angle solide supérieur ou égal à 2 π stéradians, ou bien sur une surface cylindrique ou conique présentant, de préférence, un angle polaire supérieur à 180°, laquelle surface comporte des contre-dépouilles (133), et sachant que ledit rétroréflecteur (101) conserve son aptitude au démoulage hors d'un moule d'injection utilisé pour sa fabrication.

2. Rétroréflecteur (101) selon la revendication 1, **caractérisé par le fait que** la forme de la surface courbe (135) est adaptée à une première forme recherchée préétablie, par exemple à la forme d'un projecteur d'automobile, mais peut aussi, toutefois, être utilisée dans une seconde forme recherchée pouvant s'écarter de ladite première forme recherchée.

3. Rétroréflecteur (1, 101, 201, 301) selon l'une des revendications 1 à 2, **caractérisé par le fait que** l'intersection de deux faces latérales (5, 7, 9, 105, 107, 109, 205, 207) forme, à chaque fois, une arête (11, 13, 15, 111, 113, 115, 211, 213, 215) présentant une longueur (a, b, c), et l'intégralité des trois arêtes (11, 13, 15, 111, 113, 115, 211, 213, 215) d'un triplet (3, 103, 203), ou leur prolongement le cas échéant, se coupe(nt) au niveau d'un sommet (17, 117, 217),
les faces latérales (5, 7, 9, 105, 107, 109, 205, 207) des triplets (3, 103, 203) pouvant être **caractérisées par** les paramètres (a, b, c, φ, Θ) suivants : angle décrit mutuellement par les faces latérales, longueur (a, b, c) des arêtes (11, 13, 15, 111, 113, 115, 211, 213, 215) desdites faces latérales (5, 7, 9, 105, 107, 109, 205, 207), notamment rapport des longueurs desdites arêtes à l'intérieur d'un triplet (3, 103, 203), taille des triplets (3, 103, 203), angle de torsion (φ) de toutes les faces latérales (5, 7, 9, 105, 107, 109, 205, 207) d'un triplet (3, 103, 203) autour d'un axe (19, 119, 219) qui décrit le même angle par rapport à toutes les arêtes actives (11, 13, 15, 111, 113, 115, 211, 213, 215) d'un triplet (3, 103, 203), angle d'inclinaison (Θ) des faces latérales (5, 7, 9, 105, 107, 109, 205, 207) d'un triplet (3, 103, 203), de sorte que ledit axe (19, 119, 219), décrivant le même angle par rapport à toutes les arêtes actives (11, 13, 15, 111, 113, 115, 211, 213, 215) d'un triplet (3, 103, 203), n'est plus colinéaire à un vecteur normal d'une aire de base dudit triplet (3, 103, 203).

4. Rétroréflecteur (1, 101, 201, 301) selon l'une des revendications 2 ou 3, **caractérisé par le fait qu'**un axe, décrivant le même angle par rapport à toutes les arêtes actives du triplet (3, 103, 203), est orienté dans une direction radiale (R) de la surface courbe, lesdites arêtes actives étant formées par l'intersection de deux faces latérales respectives (5, 7, 9, 105, 107, 109, 205, 207) d'un triplet.

5. Rétroréflecteur (1, 101, 201, 301) selon l'une des revendications 2 à 4, **caractérisé par le fait que** ledit rétroréflecteur (1, 101, 201, 301) comprend au moins une première région et une seconde région, au moins un triplet (3, 103, 203) pouvant être associé à chaque région, sachant que le ou les triplet(s) (3, 103, 203) de ladite première région se différencie(nt), du ou des triplet(s) (3, 103, 203) de ladite seconde région, quant à au moins l'un des paramètres (a, b, c, φ, Θ) mentionnés dans la revendication 3.

6. Rétroréflecteur (1, 101, 201, 301) selon la revendication 5, **caractérisé par le fait que** le paramètre (a, b, c, φ, Θ), dont les régions diffèrent, peut être représenté en tant que fonction d'un rayon de courbure et/ou d'un angle polaire (ϕ) et/ou d'un angle d'azimut (θ) de la surface courbe (135, 235).

7. Composant optique intégré en silicone, **caractérisé par le fait qu'**un rétroréflecteur (1, 101, 201, 301) conforme à l'une des revendications 1 à 6 est incorporé en au moins un emplacement.

8. Composant optique intégré conforme à la revendication 7, **caractérisé par le fait que** ledit composant est produit à partir d'une pièce moulée et ne comporte pas de joints.

9. Composant optique intégré conforme à l'une des revendications 7 ou 8, **caractérisé par le fait que** ledit composant est un élément de projecteur ; et **par le fait que** le rétroréflecteur (1, 101, 201, 301) se trouve, de préférence, au niveau d'une surface postérieure dudit élément de projecteur qui est tournée à l'opposé d'une surface de sortie de lumière.

10. Composant optique intégré conforme à l'une des revendications 7 ou 8, **caractérisé par le fait que** ledit composant est un marqueur opératoire conçu pour être implanté sur une partie corporelle devant être opérée, ou sur un instrument chirurgical.

11. Outil de mise en forme matérialisant un élément constitutif d'un moule d'injection dévolu à la fabrication d'un rétroréflecteur (1, 101, 201, 301) conforme à l'une des revendications 1 à 6, ou à la fabrication d'un composant optique conforme à l'une des revendications 7 à 10, doté d'un corps d'outil délimité par une surface supérieure, laquelle surface supérieure de l'outil comporte une multiplicité de triplets (153) comptant, à chaque fois, trois surfaces (155, 157, 159) mises en forme, qui sont limitrophes les unes des autres et se coupent réciproquement suivant un angle compris entre 85° et 95°, préférentiellement entre 89° et 91°, entre 89° 58' et 90° 2' avec préférence particulière, sachant que les surfaces (155, 157, 159), mises en formes sur chaque triplet (153), se rencontrent mutuellement au niveau d'un centre (167) par lequel passe l'axe de symétrie (169) du triplet (153) considéré,
et sachant que le corps dudit outil peut être chauffé,
ledit corps de l'outil étant pourvu d'au moins un élément d'outillage qui fait obstacle à un démoulage en se dressant perpendiculairement à une direction de démoulage.
